# EUROPEAN PATENT SPECIFICATION

(11) **EP 3 682 346 B1**
(45) Date of publication and mention of the grant of the patent: **08.04.2026**
(21) Application number: 18783197.9
(22) Date of filing: 12.09.2018
(51) Int. Cl.: G06F 16/958, G06N 3/0499, G06N 3/09

(54) **PREDICTING NON-OBSERVABLE PARAMETERS FOR DIGITAL COMPONENTS**
VORHERSAGE VON NICHT BEOBACHTBAREN PARAMETERN FÜR DIGITALE KOMPONENTEN
PRÉDICTION DE PARAMÈTRES NON OBSERVABLES POUR DES COMPOSANTS NUMÉRIQUES

(30) Priority: 12.09.2017 US 201762557655 P
(43) Date of publication of application: 22.07.2020
(73) Proprietor: Google LLC, Mountain View, CA 94043 (US)
(72) Inventor: YOUNG, Andrew Richard, Mountain View, California 94043 (US); CONLEY, Jonathan Joseph, Mountain View, California 94043 (US); HOLT, Gary R., Mountain View, California 94043 (US)
(74) Representative: Marks & Clerk GST
(86) International application number: PCT/US2018/050652
(87) International publication number: WO 2019/055506

(56) References cited:
- US-A1- 2003 149 937
- US-A1- 2014 068 011
- US-B1- 9 367 524

## Description

### TECHNICAL FIELD

This specification generally relates to data processing, and more particularly to predicting values for non-observable parameters used in the selection of digital components.

### BACKGROUND

The Internet has facilitated the exchange of information and the performance of transactions between users across the globe. Widespread connectivity among Internet-enabled devices allows distribution of digital content to end users at remarkable scale, e.g., for presentation in electronic documents such as web pages or application interfaces. In some instances, digital components from multiple different sources can be integrated into a single electronic document to create a composite document (e.g., a host electronic document). For example, a primary portion of the content included in an electronic document may be selected (or specified) by a publisher of the electronic document. A secondary portion of content (e.g., digital third-party content) can be distributed on behalf of a third-party (e.g., an entity that is not a publisher of the electronic document).

US9367524B1 relates to apparatus and method for dynamic web page layout optimization. A plurality of different layouts are defined for a web page of a publisher. Each of the different layouts have at least one common element and at least one content slot adapted to display a content item. A request for the web page is received from a network accessible device having associated profile information, and a selected layout is identified using the profile information. At least one content item is selected for display in each content slot of the selected layout. Data are thereafter transferred to the network accessible device to display the web page arranged in accordance with the selected layout along with the selected content item. The method involves determining whether a predicted probability is above a threshold corresponding to cost per click (CPC)-designation. A layout and a set of content slots assigned for display of a corresponding set of CPC-designated content items are selected using objective function based on clicks in responsive to determining that the predicted probability is above the threshold by identifying responsive to a computer executed auction. Data is transferred to the network accessible device to display a web page including the layout and a set of content items.

US2003/149937A1 relates to a method and system for placement of graphical objects on a page to optimize the occurrence of an event associated with such objects. The graphical objects might include, for instance, advertisements on a web page , and the event would include a user clicking on that ad. The page includes positions for receipt of the object material. Data regarding the past performance of the objects is stored and updated as new data is received. A user requests a page from a server associated with system. The server uses the performance data to derive a prioritized arrangement of the objects on the page. The server performs a calculation regarding the likelihood that an event will occur for a given object, as displayed to a particular user. The objects are arranged according to this calculation and returned to the user on the requested page. The likelihood can also be multiplied by a weighting factor and the objects arranged according to this product. The method involves storing and retrieving performance data associated with an event occurring for each object. The data is grouped and sorted based on the user characteristics, a statistical probability is computed based on user information, and upon past performance data for the objects. The objects are arranged in the web page according to the performance data.

US2014/068011A1 relates to systems and methods for predicting content performance with interest data. A content selection request that includes a client identifier is received. One or more topical interest categories associated with the client identifier may be used as inputs to a prediction model to predict the likelihood of an online action occurring as a result of third-party content being selected. The predicted likelihood may be used to select third-party content.

### SUMMARY

This document describes systems, methods, devices, and other techniques for selecting digital components to display in an electronic document such as a web page or a graphical interface of an application on a user device. In some implementations, digital components are selected for display in a document by a content distribution system that makes digital components available for distribution on behalf of many different independent content providers. The content providers may be separate from the publisher of the electronic document (e.g., third-party content providers), and so the content distribution system selects content to present in the electronic document based on an evaluation process that optimizes one or more selection criteria. For example, the content distribution system may select a digital component that is determined to be relevant to a user's query submitted at a particular website, based on similarity in topics between the website and the digital component, or based on these and additional criteria. For example, a creative (e.g., a digital component) related to downhill skiing may be selected for presentation in a webpage related to tourism in Aspen, Colorado, whereas another creative related to home improvement services may be presented in response to a query for "kitchen remodel."

The content distribution system relies in part on the context of a digital component request (e.g. a third-party content request) to determine a digital component to return to a user device in response to the request. The context of a request can indicate values for one or more parameters (referred to as "selection parameters" or "request parameters") that the content distribution system uses to select suitable and relevant components for the request. For example, the context of a request can include identifying information for the electronic document in which a selected digital component will be displayed (e.g., a URL for a webpage or an identifier for an application), parameters associated with display of the digital component within the electronic document, identifying information for the user agent in which the document is rendered (e.g. a web browser identifier, a make/model/class of the user device), a screen size and/or resolution, geographic location of the user device, current time of day when the request was submitted, keywords that describe the content of the electronic document, a search query that a user submitted to initiate a search if the digital item is to be included in a search results page, or a combination of these and other parameters.

In some instances, many of the selection parameters that form the context of a request are observable features in that they can be directly measured/observed and reported from a user device at the time that a request for a digital component is made. However, other parameters are non-observable such that they cannot be readily measured or reported to the content distribution system in time for the system to use in selecting a digital component for a request. The position that the digital component will be presented in a host electronic document is one such non-observable parameter that is not known to the system *a priori*, in time for the content selection procedure. Because documents often include dynamic elements that change for each serving, the precise display position of a third-party digital component, for example, may not be known until all the elements are actually identified and rendered at the user device. Nonetheless, the display position, and particularly the vertical display position, can have a significant impact on the effectiveness of display of a digital component. For example, such parameters may impact whether or not the content item is displayed effectively within a document.

This document describes techniques for predicting values of non-observable selection parameters such as the vertical display position of a digital component. The content distribution system uses a parameter prediction model to process observable parameters that are actually available in a request (or that can be indirectly derived from information in the request) to predict the value of a non-observable parameter such as the vertical display position of a digital component. The predicted value of the non-observable parameter are then considered, along with other predictive inputs, to predict a predicted metric for a candidate digital component (e.g., an estimated click-through rate, conversion rate, or other likelihood of user interaction with the item) that the content distribution system uses to determine whether the item should be returned in response to the request. The metric prediction model generates the predicted metric based at least in part on values for the predicted non-observable parameter, and distribution parameters associated with a candidate digital component. Furthermore, the parameter prediction model may be part of the metric prediction model. For example, the metric prediction model and parameter prediction model can be machine-learning models (e.g., neural networks) that are jointly trained and in which the output of the parameter prediction model is processed by a first hidden layer of the metric prediction model following a last layer of the parameter prediction model.

The content distribution system uses a parameter prediction model to process observable parameters that are actually available in a request (or that can be indirectly derived from information in the request) to predict the value of a non-observable parameter such as the vertical display position of a digital component. The predicted value of the non-observable parameter can then be considered, along with other predictive inputs, to select a candidate digital component that the content distribution system returns in response to the request. A performance prediction model generates a predicted performance metric based at least in part on values for the predicted non-observable parameter, and distribution parameters associated with a candidate digital content item. Furthermore, the parameter prediction model may be part of the performance prediction model. For example, the performance prediction model and parameter prediction model can be machine-learning models (e.g., neural networks) that are jointly trained and in which the output of the parameter prediction model is processed by a first hidden layer of the performance prediction model following a last layer of the parameter prediction model.

Some implementations of the subject matter described herein can, in certain instances, achieve one or more of the following advantages. First, a content distribution system may more efficiently select digital components for presentation in an electronic document using predicted selection parameters rather than observed (e.g., measured) parameters, thereby reducing latency in returning a selected digital component to a user device. For example, a browser at a user device may begin loading a web page. As part of the initial loading process, the browser may execute machine-readable instructions in the page (e.g., a script) that causes the device to request a third-party digital component from a content distribution system. The script can configure the device to embed a set of observable parameters in the request, e.g., parameters that characterize the browsing session, the user device, the web page, and/or other features. Some parameters may be determined quickly and immediately, whereas others may not be determinable until a later time (e.g., the vertical display position). Parameters that may not be determinable until a later time, may, however, impact how effectively digital components of different types or forms can be displayed and may therefore be useful in selecting digital components to be displayed to provide improved display. Rather than waiting to identify these latent parameters, the device may send a request with information about the parameters that can be immediately determined and the content distribution system can then predict the latent parameters based in part on the immediately determinable parameters. In this manner, the distribution system has the benefit of utilizing non-observable parameters (e.g., latent parameters that cannot be observed at the user device within a defined period of time or before content selection has occurred), without waiting for the actual values of these parameters to become available. The system may thereby select and return a digital component to the user device responsive to the request at an earlier time, thereby reducing latency in responding to a request and reducing the time required for the browser to completely render the web page with third-party digital components. The returned digital components may be better adapted to the display and/or interface such that the selected digital components are displayed more effectively to the user. In particular, the use of predicted latent parameters may allow the display of content to be improved.

Second, in some implementations, the size and complexity of third-party content requests transmitted from a user device to a content distribution system may be reduced by the elimination of some observed or measured parameters from the requests. The content distribution system can then predict values for one or more parameters that are not included in the request rather than relying on the user device to directly report the values to the system as part of a request. The parameters not included in a request may be non-observable parameters, since these parameters may not be determinable at the user device within desired constraints (e.g., temporal or processing constraints). Transmission of smaller-sized requests may conserve network bandwidth, and advantageously may reduce the processing burden on the user devices that generate requests and the distribution system that receives and parses the request.

Third, some implementations of the subject matter disclosed herein can improve the ability of a content distribution system to select more relevant digital components for presentation in an electronic document. For example, rather than foregoing use of non-observable parameters of a request, the system may predict values for these parameters, which in some instances can significantly impact the predicted metrics for candidate digital components and improve the system's ability to select items to return in response to a request, e.g., items that may be better adapted to the display environment and/or to the user.

Fourth, in some implementations, the content distribution system may more efficiently generate a predicted metric for a candidate digital component by evaluating the item using a metric prediction model having an embedded parameter prediction sub-model. By embedding the parameter prediction model as a component of the metric prediction model and jointly training the models, the system may generate a predicted metric on the basis of a single request rather than separate, serialized requests first for a predicted value of a non-observable request parameter and then for a predicted metric in a separate stage. Additionally, the models may be more easily maintained because re-training based on new training data may be performed on the models collectively, e.g., rather than deferring training of the metric prediction model until the parameter prediction model is fully trained.

Additional features and advantages will be recognized and understood by those of ordinary skill in the art in view of the entire specification, the claims, and the figures.

### DESCRIPTION OF DRAWINGS

Figure 1 is a block diagram of an example environment in which third-party digital content is distributed for presentation in electronic documents.
Figures 2A-2C depict screenshots of an example electronic document having display regions reserved for presentation of third-party digital components.
Figure 3 is a block diagram of an example content distribution system that selects digital components for presentation in electronic documents.
Figure 4A is a block diagram of an example metric prediction model having an embedded parameter prediction sub-model.
Figure 4B is a block diagram of an example parameter prediction model implemented separately from the metric prediction model.
Figure 5 is a flowchart of an example process for selecting one or more digital components to return for presentation in an electronic document in response to a request
Figure 6 is a flowchart of an example process for training a metric prediction model having an embedded parameter prediction sub-model.
Figure 7 depicts an example computing device and mobile computing device that may be applied to implement the computer-implemented methods and other techniques disclosed herein.

Like numbers and references among the drawings indicate like elements.

### DETAILED DESCRIPTION

This document describes systems, methods, devices, and other techniques for predicting values of parameters used by a content distribution system in selecting third-party digital components to present in an electronic interface (e.g., an interface for an electronic document) at a user device. The selection uses predicted parameters that are generated based upon actual parameters. The predicted parameters allow digital components to be selected that are better adapted for displaying to the user. For example, in some implementations the selected digital components may predict parameters of the user device and/or display environment that are not available at the time that a request is sent such that the predicted parameters are taken into account when selecting the content, resulting in the selected digital components being better adapted for display at the user device.

In some implementations, the content distribution system may use a metric prediction model to estimate a likelihood that user interaction will occur with the digital component in the electronic interface. This prediction may be determined based on predictive inputs representing observed selection parameters from a request for the electronic content, distribution parameters associated with candidate digital components, as well as predicted values for one or more non-observable parameters as determined by a parameter prediction model at the content distribution system. These and other implementations are described in further detail with respect to the figures.

As used throughout this document, the phrase "digital component" refers to a discrete unit of digital content or digital information (e.g., a video clip, audio clip, multimedia clip, image, text, or another unit of content). A digital component can electronically be stored in a physical memory device as a single file or in a collection of files, and digital components can take the form of video files, audio files, multimedia files, image files, or text files and include advertising information, such that an advertisement is a type of digital component.

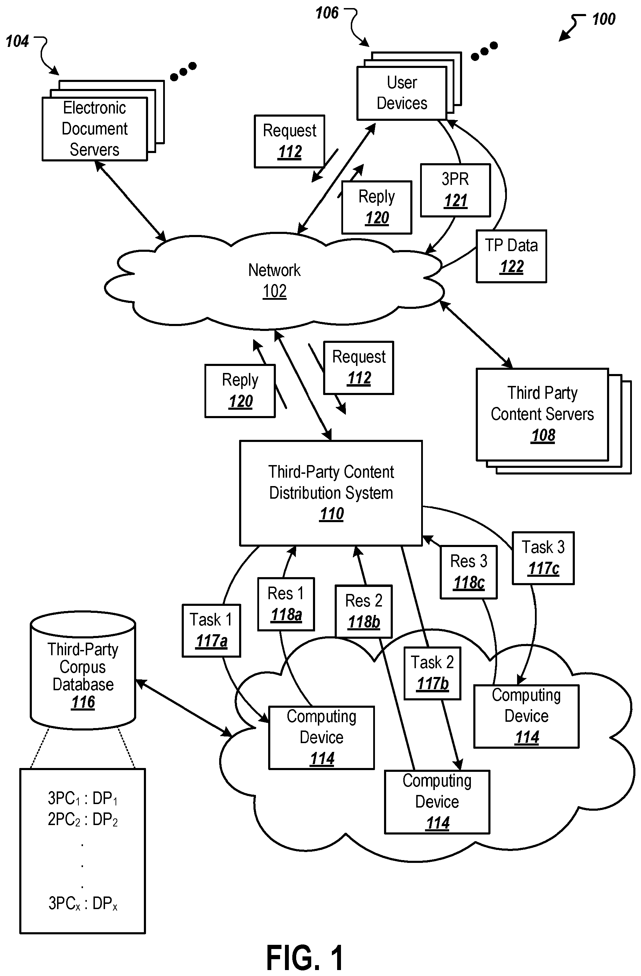

Figure 1 is a block diagram of an example environment 100 in which third-party digital content is distributed for presentation with electronic documents. The example environment 100 includes a network 102, such as a local area network (LAN), a wide area network (WAN), the Internet, or a combination thereof. The network 102 connects electronic document servers 104, user devices 106, third-party content servers 108, and a third-party content distribution system 110 (also referred to as a content distribution system). The example environment 100 may include many different electronic document servers 104, user devices 106 (e.g., client computers), and third-party content servers 108.

A user device 106 is an electronic device that is capable of requesting and receiving digital components (e.g., electronic documents and third-party digital content for presentation in the electronic documents) over the network 102. Example user devices 106 include personal computers, mobile communication devices, and other devices that can send and receive data over the network 102. A user device 106 typically includes a user application, such as a web browser, to facilitate the sending and receiving of data over the network 102, but native applications executed by the user device 106 can also facilitate the sending and receiving of data over the network 102.

An electronic document is data that presents a set of content at a user device 106. Examples of electronic documents include webpages, word processing documents, portable document format (PDF) documents, images, videos, search results pages, and feed sources. Native applications (e.g., "apps"), such as applications installed on mobile, tablet, or desktop computing devices are also examples of electronic documents, e.g., which present graphical application interfaces at the user devices 106. Electronic documents can be provided to user devices 106 by electronic document servers 104. For example, the electronic document servers 104 can include servers that host publisher websites. In this example, the user device 106 can initiate a request for a given publisher webpage, and the electronic server 104 that hosts the given publisher webpage can respond to the request by sending machine executable instructions that initiate presentation of the given webpage at the user device 106.

In another example, the electronic document servers 104 can include app servers from which user devices 106 can download apps (e.g., native applications). In this example, the user device 106 can download files required to install an app at the user device 106, and then execute the downloaded app locally.

Electronic documents can include a variety of content. For example, electronic document can include static content (e.g., text or other specified content) that is within the electronic document itself and/or does not change over time. Electronic documents can also include dynamic content that may change over time or on a per-request basis. For example, a publisher of a given electronic document can maintain a data source that is used to populate portions of the electronic document. In this example, the given electronic document can include a tag or script that causes the user device 106 to request content from the data source when the given electronic document is processed (e.g., rendered or executed) by a user device 106. The user device 106 integrates the content obtained from the data source into a presentation of the given electronic document to create a composite electronic document including the content obtained from the data source.

In some instances, a given electronic document can include a third-party tag or third-party script that references the third-party content distribution system 110. In these instances, the third-party tag or third-party script is executed by the user device 106 when the given electronic document is processed by the user device 106. Execution of the third-party tag or third-party script configures the user device 106 to generate a request for third-party content 112, which is transmitted over the network 102 to the third-party content distribution system 110. For example, the third-party tag or third-party script can enable the user device 106 to generate a packetized data request including a header and payload data. The request 112 can include data that defines a context of the request and which can be used by the third-party content distribution system 110 in a process to select one or more third-party digital components for presentation in the electronic document. The context of a request can include parameters collected or determined by the user device 106 such as a name (or network location) of a server from which the third-party content is being requested, a name (or network location) of the requesting device (e.g., the user device 106), and/or other information that the third-party content distribution system 110 can use to select third-party content provided in response to the request. Parameters included in a request 112 may be referred to as observable parameters because they represent actual values of parameters associated with a request (e.g., in contrast to predicted/estimated values or non-observable parameters that cannot be observed as a result of inherent or prescribed constraints). The request 112 can be transmitted, by the user device 106, over the network 102 (e.g., a telecommunications network) to a server of the third-party content distribution system 110. In some implementations, the request 112 can include data specifying keywords associated with the electronic document, a reference (e.g., URL) to the electronic document, available locations (e.g., third-party content slots) of the electronic documents that are available to present third-party content, sizes of the available locations, and/or media types that are eligible for presentation in the locations can be provided to the content distribution system 110. Similarly, data specifying keywords associated with the electronic document or entities (e.g., people, places, or things) that are referenced by the electronic document can also be included in the request 112 (e.g., as payload data) and provided to the content distribution system 110 to facilitate identification of third-party digital components.

Requests 112 can also include data related to other information, such as information that the user has provided (e.g., a search query), geographic information indicating a state or region from which the request was submitted, or other information that provides context for the environment in which the third-party content will be displayed (e.g., a type of device at which the third-party content will be displayed, such as a mobile device or tablet device). Data specifying characteristics of the user device 106 can also be provided in the request 112, such as information that identifies a model of the user device 106, a configuration of the user device 106, or a size (e.g., physical size or resolution) of an electronic display (e.g., touchscreen or desktop monitor) on which the electronic document is presented. Requests 112 can be transmitted, for example, over a packetized network, and the requests 112 themselves can be formatted as packetized data having a header and payload data. The header can specify a destination of the packet and the payload data can include any of the information discussed above.

The third-party content distribution system 110 selects third-party content that will be presented with the given electronic document in response to receiving the request 112 and/or using information included in the request 112. In some implementations, the third-party content is selected in less than a second to avoid errors that could be caused by delayed selection of the third-party content. For example, delays in providing third-party content in response to a request 112 can result in page load errors at the user device 106 or cause portions of the electronic document to remain unpopulated even after other portions of the electronic document are presented at the user device 106. Also, as the delay in providing third-party content to the user device 106 increases, it is more likely that the electronic document will no longer be presented at the user device 106 when the third-party content, thereby negatively impacting a user's experience with the electronic document. Further, delays in providing the third-party content can result in a failed delivery of the third-party content, for example, if the electronic document is no longer presented at the user device 106 when the third-party content is provided.

In some implementations, the third-party content distribution system 110 is implemented in a distributed computing system that includes, for example, a server and a set of multiple computing devices 114 that are interconnected and identify and distribute third-party content in response to requests 112. The set of multiple computing devices 114 operate together to identify a set of third-party content that are eligible to be presented in the electronic document from among a corpus of millions of available third-party content (3PC1-x). The millions of available third-party content can be indexed, for example, in a third-party corpus database 116. Each third-party content index entry can reference the corresponding third-party content and/or include distribution parameters (DP1-DPx) that condition the distribution of the corresponding third-party content.

In some implementations, the distribution parameters for a particular third-party digital component can include distribution keywords that must be matched (e.g., by electronic documents or terms specified in the request 112) in order for the third-party content to be eligible for presentation. The distribution parameters can also require that the request 112 include information specifying a particular geographic region (e.g., country, state, or city) and/or information specifying that the request 112 originated at a particular type of user device (e.g., mobile device or tablet device) in order for the third-party content to be eligible for presentation. The distribution parameters can also specify a bid and/or budget for distributing the particular third-party content.

The identification of the eligible third-party content can be segmented into multiple tasks 117a-117c that are then assigned among computing devices within the set of multiple computing devices 114. For example, different computing devices in the set 114 can each analyze a different portion of the third-party corpus database 116 to identify various third-party content having distribution parameters that match information included in the request 112. In some implementations, each given computing device in the set 114 can analyze a different data dimension (or set of dimensions) and pass results (Res 1-Res 3) 118a-118c of the analysis back to the third-party content distribution system 110. For example, the results 118a-118c provided by each of the computing devices in the set may identify a subset of third-party content that are eligible for distribution in response to the request and/or a subset of the third-party content that have certain distribution parameters or attributes.

The third-party content distribution system 110 aggregates the results 118a-118c received from the set of multiple computing devices 114 and uses information associated with the aggregated results to select one or more instances of third-party content that will be provided in response to the request 112. For example, the third-party content distribution system 110 can select a set of winning third-party digital components based on the outcome of one or more content evaluation processes, as discussed in further detail below. For example, the distribution system 110 may predict a non-observable parameter that was not specified in the request 112 and use the predicted parameter and others to determine how effectively the digital component will be displayed. The determination of how effectively the digital component will be displayed may, for example, be based upon compatibility between the display environment and the digital component. Compatibility between the display environment and the digital component may be determined based upon received parameters associated with the display environment and predicted parameters associated with the display environment, together with stored parameters associated with the digital component. In some implementations the received and predicted parameters may be used to estimate how likely a user will click on a digital component, or otherwise interact with the item, if it were returned to the device in response to the request 112 and presented to the user. In turn, the third-party content distribution system 110 can generate and transmit, over the network 102, reply data 120 (e.g., digital data representing a reply) that enables the user device 106 to integrate the set of winning third-party content into the given electronic document, such that the set of winning third-party content and the content of the electronic document are presented together at a display of the user device 106.

In some implementations, the user device 106 executes instructions included in the reply data 120, which configures and enables the user device 106 to obtain the set of winning third-party content from one or more third-party content servers. For example, the instructions in the reply data 120 can include a network location (e.g., a Uniform Resource Locator (URL)) and a script that causes the user device 106 to transmit a third-party request (3PR) 121 to the third-party content server 108 to obtain a given winning third-party content from the third-party content server 108. In response to the request, the third-party content server 108 will transmit, to the user device 106, third-party data (TP Data) 122 that causes the given winning third-party content to be incorporated into the electronic document and presented at the user device 106.

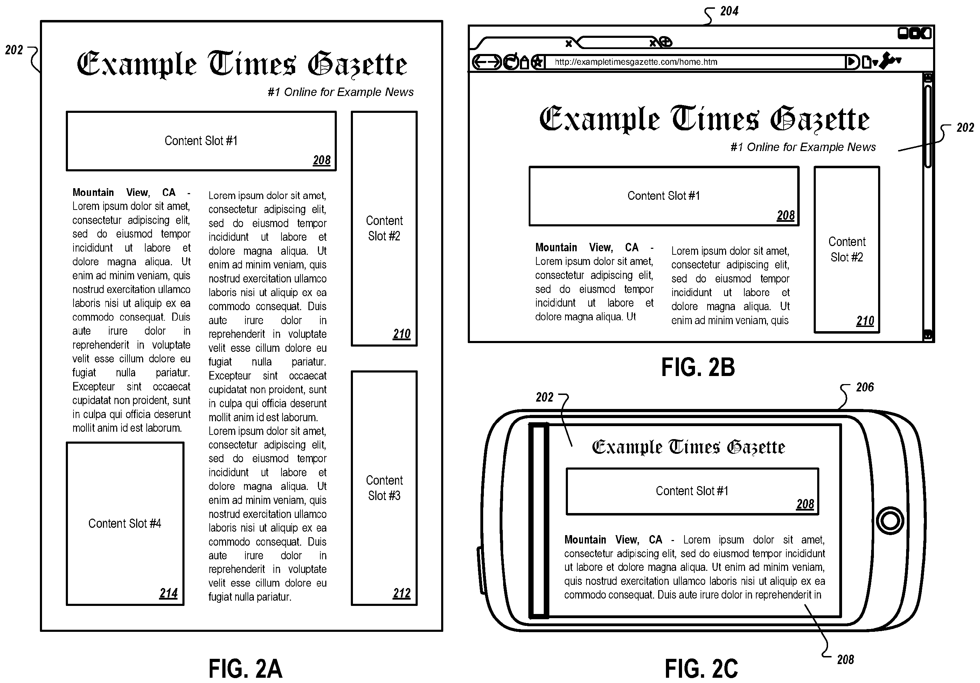

Figures 2A-2C depict screenshots of an example electronic document 202 presented in different contexts. In this example, the document 202 is a web page for an online news site. As Figure 2A shows, the document 202 includes multiple content slots 208-214, which define respective regions of the electronic document 202 for displaying third-party digital components. A third-party content distribution system may select the components for display in the slots 208-214 based on a request from a user device in which the document 202 is rendered. Figure 2A is a zoomed-out view of the document 202 that shows an entirety of the document's length and width. In the zoomed-out view, all four content slots 208, 210, 212, and 214 can be seen concurrently with each other. In practice, however, the document 202 may be larger than the viewing area provided on a screen of a user's device, such that only a portion of the document 202 is displayed within the viewing area at a time. An application on the user's device, for example, may provide a control that allows the document to be panned, scrolled, or zoomed to enable a user to view different portions of the document 202. Figure 2B is a screenshot of the electronic document 202 within a relatively large viewing area 204, e.g., in a web browser interface on a larger screen of a user device (e.g., a desktop LCD monitor). Figure 2C, in contrast, is a screenshot that shows the document 202 within a smaller viewing area 208 of a native application on a mobile computing device 206.

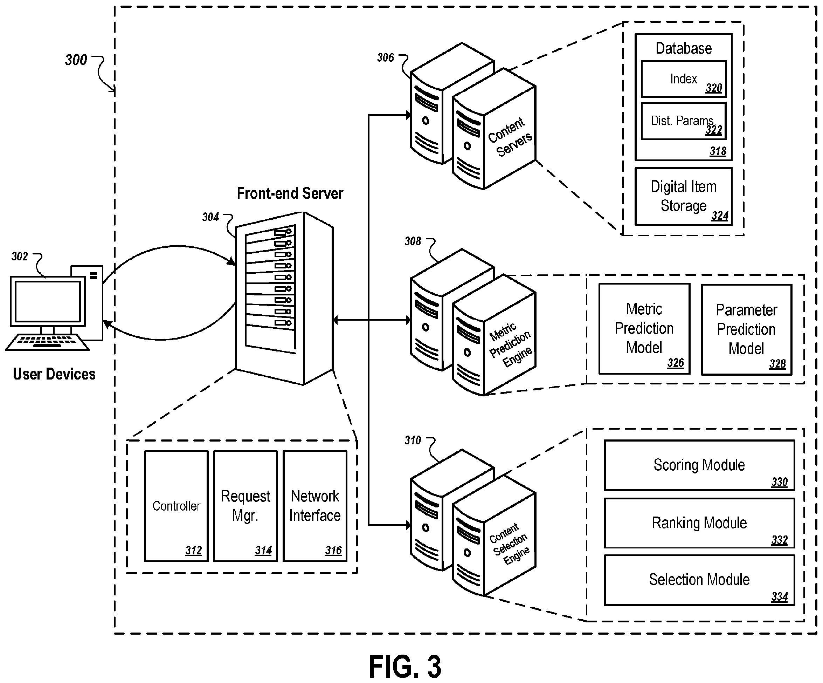

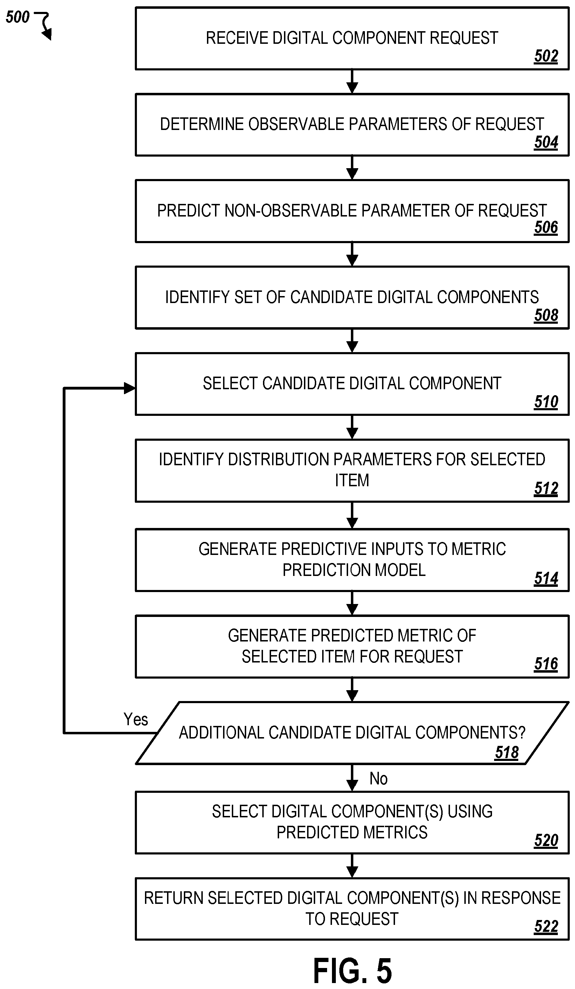

Figure 3 is a block diagram of an example content distribution system 300 that selects digital components for presentation in electronic documents. The system 300 is generally configured to select one or more digital components in response to a request for third-party content from user device 302 based on received and predicted parameters. The system may also select digital components based at least in part on predicted metrics for a set of candidate digital components. The system 300 performs a two-stage process to determine the predicted metric. First, the system 300 processes predictive inputs corresponding to a first subset of observable selection parameters associated with the request (and optionally predictive inputs corresponding to distribution parameters associated with the candidate digital component) to predict (e.g., compute, determine, or derive) values for one or more non-observable selection parameters (e.g., the vertical display position at which the digital component will be presented in an electronic document presented at the user device 302). Second, the system 300 processes predictive inputs corresponding to a second subset of observable selection parameters associated with the request, distribution parameters associated with the candidate digital component, and the predicted values for the one or more non-observable selection parameters to determine the predicted metric for the candidate digital component. A process for determining predicted metrics and selecting winning digital components in response to a request is discussed in further detail with respect to Figure 5.

The content distribution system 300 can include a front-end server 304, one or more third-party content servers 306, a metric prediction engine 308, and a content selection engine 310. In some implementations, the third-party content servers 306 are separate from the content distribution system 300 and may be maintained, for example, by individual third-party content providers or networks of third-party content providers. Generally, each of the servers 304, 306, 308, and 310 can be implemented with one or more computers operating in one or more locations separately or in coordination with each other. All or some of the servers 304, 306, 308, and 310 may be integrated on common computer hardware, or they may be implemented separately on different computers with physically distinct hardware. The division of operations performed by the servers 304, 306, 308, and 310 as discussed herein is by way of example only. In some implementations, other configurations of computers may be provided that are configured to perform similar operations similar to those discussed herein.

The front-end server 304 provides an interface for the content distribution system 300 to interact with other computers over a communications network (e.g., the Internet or a Local Area Network). For example, Figure 3 shows the front-end server 304 communicating with a client computer 302. The front-end server 304 receives requests for third-party content, performs initial processing of received requests, forwards information derived from requests to other appropriate components of the content distribution system 300, and transmits responses that the system 300 generates in response to requests. In some implementations, the front-end server 304 includes a controller 312, a request manager 314, and a network interface 316.

The controller 312 coordinates operations among the various components of the front-end server 304.

The network interface 316 provides an interconnection between the content distribution system 300 and one or more networks, which may be either public (e.g., the Internet) or private (e.g., a local area network). The network interface 316 may include one or more network interface cards, which for example, are configured to transmit and receive data over a packetized network. The network interface 316 may process incoming packets that correspond to third-party content requests, and may generate and transmit packets that define responses to the third-party content requests.

The request manager 312 is configured to analyze third-party requests and perform various pre-processing operations on third-party content requests received by the system 300. In some implementations, the request manager 312 may parse a request to identify values of parameters that the system 300 is configured to use as input for selecting third-party digital components. For example, the request manager 312 can extract values corresponding to observable selection parameters specified in the request. Observable parameters refer to parameters having actual values (e.g., rather than predicted values) that are specified in a request or that have actual values that the content distribution system can derive from information in the request. For instance, a request may specify values for observable parameters such as an identity of a user agent at the user device 302 in which the electronic interface is presented, a geographic location of the user device 302 when the request was submitted, a time of day associated with the request, a search query associated with the request, a reference to the electronic document in which the requested digital component is to be presented, keywords derived from content of the electronic document and/or a search query, or a combination of all or some of these and other parameters. In some implementations, the content distribution system 300 may derive observable parameters indirectly from data specified in a request, even if the request does not directly specify the observable parameters. For example, the request may include data identifying a user account associated with the request, and the distribution system may then access profile data for a user who is registered to the user account in order to obtain data that the system may use to tailor its content selection to the user's profile.

The third-party content servers 306 maintain information for digital components that one or more third-party content providers have made available for distribution. In some implementations, the third-party content servers 306 can be implemented as third-party content servers 108 (FIG. 1). Third-party content servers 306 can include digital component storage 324 (e.g., one or more non-volatile memory storage devices) that store digital components which have been made available for distribution. A database 318 can maintain an index 320 of available digital components stored in memory 324. The database 318 can also store data representing distribution parameters for each digital component. In some implementations, distribution parameters of a digital component include distribution keywords that describe the digital component (e.g., keywords that describe a topic of the item or keywords associated with a product or service represented in the item) and a bid amount for the item (e.g., an amount that the creator of the item may be charged per click or per 1,000 impressions of the item). The distribution parameters can also include information specifying a particular geographic region (e.g., country, state, or city) and/or information specifying that a request originated at a particular type of user device (e.g., mobile device or tablet device) in order for the digital component to be eligible for presentation. The distribution parameters can also specify intrinsic properties of the digital component such as a size, a format, and/or a type (e.g., text, image, or video) of the digital component.

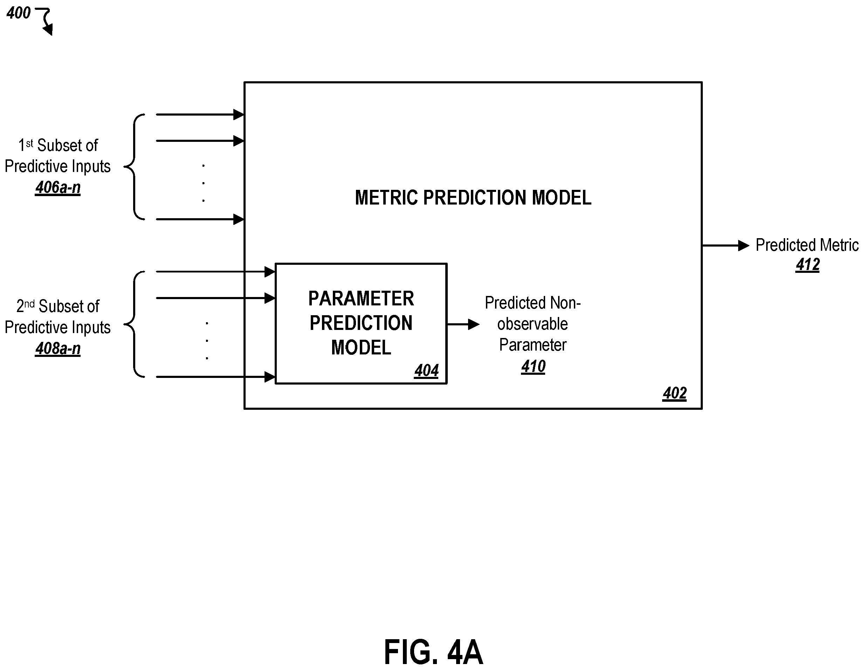

The metric prediction engine 308 is configured to predict how well a candidate digital component is likely to perform if it were selected as a winning item and displayed in an electronic document at the user device 302 in response to a particular request. In some implementations, the metric prediction engine 308 generates a predicted metric for a candidate digital component that indicates a likelihood a user will interact with the digital component if it were returned in response to a request. For example, the metric prediction engine 308 may predict a click-through rate ("CTR") for the digital component in the electronic document. To generate the predicted metric, the engine 308 includes a metric prediction model 326 and a parameter prediction model 328. The parameter prediction model 328 first processes a subset of predictive features to determine a predicted value for a non-observable selection parameter (e.g., the vertical display position of a third-party digital component in an electronic document). The metric prediction model 326 then processes the predicted value for the non-observable selection parameter and other predictive inputs to generate the predicted metric. In some implementations, the metric prediction engine 308 generates predictive inputs in a suitable format for the models 326, 328 based on selection parameters associated with the request and distribution parameters associated with the candidate digital component. Additional details about the metric prediction model 326 and the parameter prediction model 328 are described further with respect to Figures 4A, 4B, 5, and 6.

In addition or alternatively to the vertical display position, the parameter prediction model 328 can be configured to predict other non-observable selection parameters as well. For example, if any of the following parameters are not available to the distribution system at serving time in response to a request, the model 328 may predict display properties of the electronic document in which a digital component will be displayed, display properties of the device or system at which the digital component will be displayed (e.g., the screen size/resolution, the class/make/model of the device), user agent or device type/class, the number of other third-party digital components that will be presented in a document along with a requested third-party digital component, properties of those other digital components, characteristics of search results that are to be presented in the electronic document along with the requested third-party digital component. In some implementations, the model 328 may be configured to predict observable selection parameters in the event that an observable parameter is unavailable to the distribution and selection system (e.g., due to failure of a system component or inability of the client device to report a particular parameter). The prediction model 328 can then predict the value of the parameter for use as a backup if an observed (e.g., measured) value of that parameter is unavailable.

The distribution system 300 further includes a content selection engine 310. The content selection engine 310 is configured to select particular digital components to present in an electronic document at the user device 302 in response to a third-party content request. The content selection engine 310 selects the digital content items based on received and predicted parameters. The content selection engine 310 can select the digital components based on the predicted metrics for the digital components and, optionally, further based on additional factors such as the bid amounts associated with the digital components. For example, a scoring module 330 may score a set of candidate digital components based on their predicted metrics, bid amounts, and none, one, or more additional factors. The ranking module 332 may rank the candidate digital components based on their scores, and then a selection module 324 may select the winning third-party content based on the scores and/or the rankings. For instance, the *n* (e.g., 1, 2, 3, or more) highest-ranked candidate digital components may be selected as winning content to be presented at the user device 302.

Figure 4A is a block diagram 400 of an example metric prediction model 402 having an embedded parameter prediction sub-model 404. The metric prediction model 402, including parameter prediction sub-model 404, can be implemented on one or more computer in one or more locations, e.g., as part of a metric prediction engine 308. As with models 326 and 328 (FIG .3), the metric prediction model 402 is configured to generate a predicted metric for a candidate digital component given a set of selection parameters for a third-party content request, and the parameter prediction model 404 is configured to generate a predicted value of a non-observable parameter for which an actual value could not be determined directly or indirectly from the request. The parameter prediction model 404 processes a subset of predictive inputs 408a-n to generate the predicted value of the non-observable parameter 410. Another portion of the metric prediction model 402 then processes another subset of predictive inputs 406a-n and a predicted input based on the predicted value of the non-observable parameter 410 to generate the predicted metric 412.

The metric prediction model 402 and the parameter prediction sub-model 404 can be machine-learning models. In some implementations, the models 402, 404 are artificial neural networks (e.g., feedforward neural networks, convolutional neural networks, or recurrent neural networks). Neural networks are machine learning models that employ one or more layers of nonlinear units to predict an output for a received input. Some neural networks include one or more hidden layers in addition to an output layer. The output of each hidden layer is used as input to the next layer in the network, e.g., the next hidden layer or the output layer. Each layer of the network generates an output from a received input in accordance with current values of a respective set of parameters of the network (e.g., weights for nodes/neurons of the network). The values of the parameters of a neural network define its state, which may be iteratively updated during a training procedure.

In some implementations, the parameter prediction sub-model 404 is attached to a first layer of a primary portion of the metric prediction model 402. In this manner, the output of the parameter prediction model 404 (e.g., the predicted value of the non-observable selection parameter 410) is fed to the first layer of the primary portion of the metric prediction model 402 like the other predictive inputs in the first subset 406a-n.

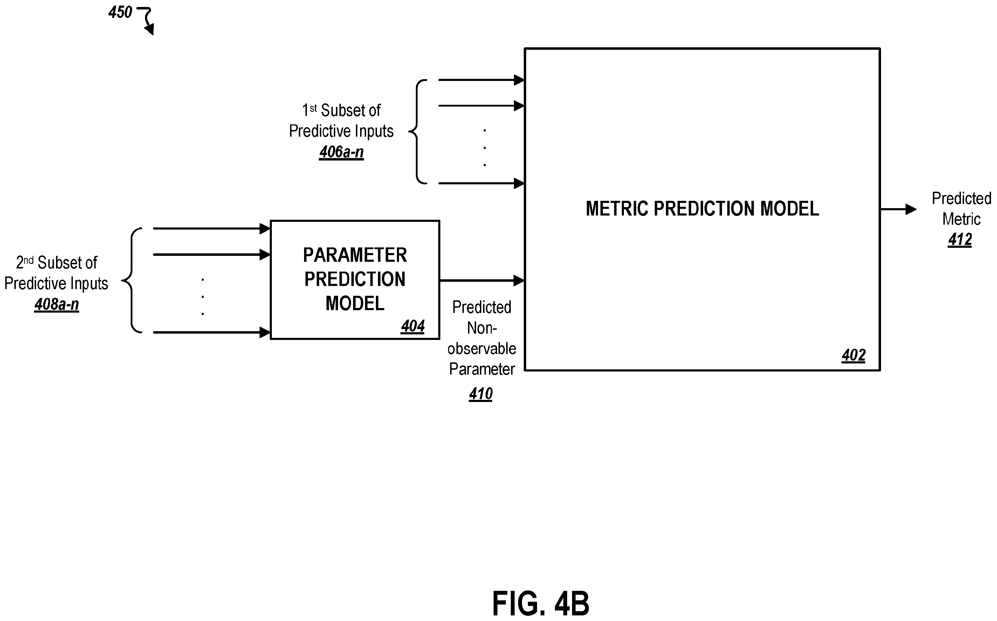

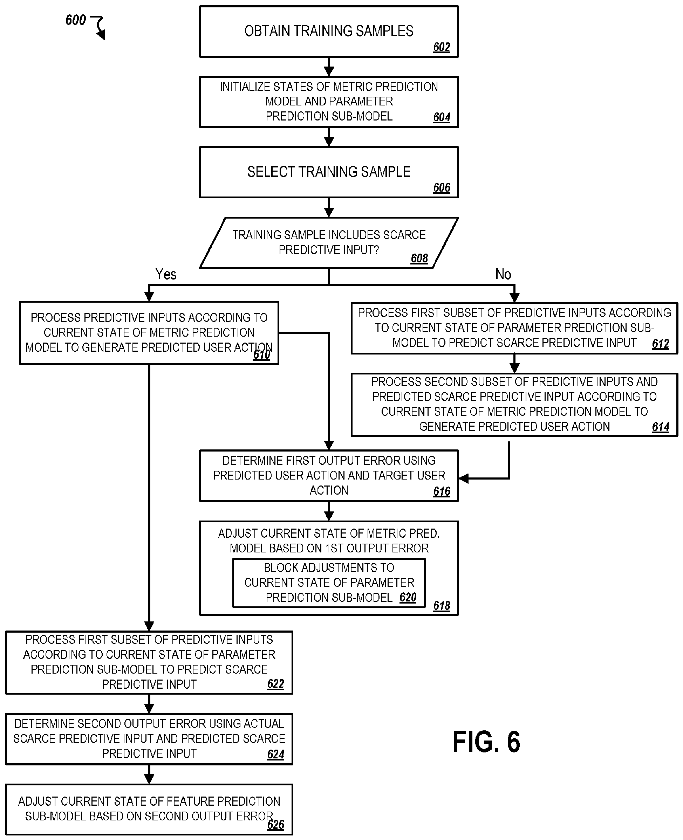

In an alternative implementation, Figure 4B is a block diagram 450 of an example parameter prediction model 404 that is independent of the metric prediction model 402. In this implementation, the parameter prediction model 404 is separate from the metric prediction model 402. For example, the parameter prediction model 404 may be fully trained independently of the metric prediction model 402, and the metric prediction model 402 may be trained thereafter using the fully trained parameter prediction model 404. Further detail of training the metric prediction model 402 and the parameter prediction model is discussed with respect to Figure 6.

As with the implementation depicted in Figure 4A, the metric prediction model 402 is configured to generate a predicted metric for a candidate digital component given a set of selection parameters for a third-party content request, and the parameter prediction model 404 is configured to generate a predicted value of a non-observable parameter for which an actual value could not be determined directly or indirectly from the request. The parameter prediction model 404 processes a subset of predictive inputs 408a-n to generate the predicted value of the non-observable parameter 410. The metric prediction model 402 then processes another subset of predictive inputs 406a-n and a predicted input based on the predicted value of the non-observable parameter 410 to generate the predicted metric 412.

Figure 5 is a flowchart of an example process 500 for selecting one or more third-party digital components to return for presentation in an electronic document at a user device in response to a request. The process 500 may be carried out by a content distribution system, e.g., systems 110 or 300 using a metric prediction model, e.g., models 326 or 402, and a parameter prediction model, e.g., models 328 or 404.

At stage 502, the system receives a request for a digital component to be incorporated into a presentation of an electronic document (e.g., an electronic interface) at a user device. The request can be a packetized data request initiated based on automatic or user input at the user device. For example, a user may visit a website that includes a search function that allows the user to search the website itself or search for items hosted outside of the website, or both. The user may submit a search query through a search interface displayed on a webpage so as to cause the device to submit a search request. The results page that will be presented in response to the search may include slots reserved for third-party digital components either as the search results themselves or as supplementary comment presented alongside the search results. The search request itself may include the third-party content request, or a separate third-party content request may be generated in addition to the search request so that the third-party content request is transmitted to the content distribution system separately from the search request being transmitted to a search system.

The third-party content request may include a set of values that at least partially define a context for the request. The values specified in the request may correspond to observable parameters that can be measured, collected, or otherwise observed by the user device 106 at the time of generating the request. The request specifies values for observable parameters such as an identity of a user agent at the user device in which the electronic interface is presented, a geographic location of the user device when the request was submitted, a time of day associated with the request, a search query associated with the request, a reference to the electronic document in which the requested digital component is to be presented, keywords derived from content of the electronic document and/or a search query, or a combination of all or some of these and other parameters. In some implementations, the content distribution system may derive observable parameters indirectly from data specified in a request, even if the request does not directly specify the observable parameters.

At stage 506, the distribution system generates predicted values for one or more non-observable parameters of the request. A non-observable parameter is generally a parameter that is not specified in a third-party digital component request and for which an actual value for the parameter cannot be derived indirectly from data specified in the request. The non-observable parameter may be associated with display of a content item. The non-observable parameter is a display position for a requested third-party digital component in an electronic document. It may be infeasible for a user device to efficiently or accurately determine an absolute position (e.g., in terms of coordinates or number of pixels offset from an origin position) that a third-party digital component will actually be displayed in an electronic document at the time the third-party content request is generated and transmitted, which may be before the document is entirely rendered. Nonetheless, the display position of a digital third-party component may significantly impact how the component is displayed. For example, the display position may impact whether the digital component is effectively displayed. Such effective display of a digital component may, for example, vary based upon properties of the device on which the component is to be displayed. In some embodiments, the position may impact the likelihood that a user actual views and interacts with the digital component in the electronic document. The vertical display position can be particularly significant, in some implementations. For example, a digital component that is displayed in a prominent position near the top of a document when the document is initially loaded may be more effectively displayed to a user, and may for example be expected to achieve higher rates of user interaction (e.g., clicks) than if the digital component were displayed in a less prominent position near the bottom of the document, which may not be seen unless the user scrolls to the bottom of the document. By way of example, the process 500 will be described with respect to a single non-observable parameter, but some implementations of the techniques described herein may predict values for multiple non-observable parameters.

The system generates the predicted value for a non-observable parameter using a parameter prediction model. The parameter prediction model may be a machine-learning model, e.g., an artificial neural network or a support vector machine. As discussed with respect to Figures 4A and 4B, the parameter prediction model may be a portion of a larger metric prediction model, or it may be implemented as an independent model. Predictive inputs derived from values for a first subset of the observable parameters of the request are processed by the parameter prediction model to generate the predicted value for the non-observable parameter. For example, to predict the vertical display position of a requested third-party component, predictive inputs representing the user agent identity, the screen size or resolution of the user device display, and a projected layout of the electronic document are processed by the parameter prediction model make the prediction. One or more predictive inputs to the parameter prediction model are derived at least in part from distribution parameters associated with the candidate digital component that is under evaluation. For example, different candidate items may have different formats or sizes that would result in a different vertical display position. A predicted vertical display position in some implementations may be characterized by a distance of a reference point in the digital component (e.g., a topmost pixel) from the top of the document or interface in which the item would be displayed.

At stage 508, the system identifies a set of candidate digital components. The candidate digital components may be selected based on the items satisfying one or more eligibility criteria for the request. For example, items of a suitable format and having distribution parameters that meet required selection criteria may be selected from an index of available third-party digital components for evaluation as candidate items to return in response to the request.

At stage 510, the system selects a particular candidate digital component from the set of candidate digital components to evaluate.

At stage 512, the system can identify values for distribution parameters associated with the selected candidate digital component. In some implementations, distribution parameters of a candidate digital component include distribution keywords that describe the candidate digital component (e.g., keywords that describe a topic of the item or keywords associated with a product or service represented in the item) and a bid amount for the item (e.g., an amount that the creator of the item may be charged per click or per 1,000 impressions of the item). The distribution parameters can also include information specifying a particular geographic region (e.g., country, state, or city) and/or information specifying that a request originated at a particular type of user device (e.g., mobile device or tablet device) in order for the digital component to be eligible for presentation. The distribution parameters can also specify intrinsic properties of the digital component such as a size, a format, and/or a type (e.g., text, image, or video) of the digital component.

At stage 514, the system can generate predictive inputs to a metric prediction model that maps predictive inputs to a predicted metric for a candidate digital component. The predictive inputs to the metric prediction model may be generated based on actual values for observable parameters of the request, predicted values for non-observable parameters, values for distribution parameters of the candidate digital component, or a combination of these. Some predictive inputs may directly represent particular request or distribution parameter. For example, a first predictive input may represent keywords specified in the request, while a second predictive input may represent keywords associated with the candidate digital component. In some implementations, a given predictive input is generated based on multiple parameters. For example, rather than the model processing separate predictive inputs for the keywords specified in the request and the keywords associated with the candidate digital component, the metric prediction engine may instead generate a single predictive input that represents, e.g., a degree of similarity between the request's keywords and the keywords from the distribution parameters of the candidate digital component. The metric prediction model may include a portion that process a second subset of predictive inputs that is partially or entirely different from the predictive inputs that the parameter prediction model processes to generate the predicted value for the non-observable parameter.

At stage 516, the system processes the predictive inputs with a metric prediction model to generate a predicted metric for the candidate digital component. The predicted metric is a value that represents a projected performance of the candidate digital component if it were selected as a winning item and displayed in the electronic document at the user device. The performance of a digital component can relate to how useful/relevant it is to a user of the user device when presented in the electronic document, or how useful/relevant it is to a population of users when presented in the electronic document at respective user devices for the population of users. In some implementations, the usefulness or relevance of a digital component is measured by its click-through rate. For example, a third-party digital component presented in an electronic document may include hyperlink functionality. As a result, when a user selects (e.g., "clicks") a linked digital component in the document, the user device may be redirected to another document (e.g., another website or an interface for another native application) that is associated with the digital component. A higher rate of user interaction (e.g., clicks) with a third-party digital component may indicate a greater relevance for the item, and is thus deemed to be a higher performing item. The predicted metric thus indicates a likelihood that one or more forms of user interaction (e.g., clicks) with the candidate digital component will occur if the item is returned to the user device and presented in the electronic document. The metric prediction model may be trained on historical data that indicates whether users interacted with third party components in a variety of contexts characterized by observable request parameters, non-observable request parameters, distribution parameters, or a combination of such parameters. Further detail on training the metric prediction model is described with respect to Figure 6.

At stage 518, the system determines whether any additional items remain in the set of candidate digital components for evaluation (e.g., items for which a predicted metric has not yet been determined). If additional items remain, the process 500 returns to stage 510 where a new candidate digital component is selected and evaluated. Stages 510-518 are repeated until a terminating condition occurs, such as there being no remaining candidate digital components to evaluate for a predicted metric.

At stage 520, the system selects one or more winning digital components from the set of candidate digital components. The winning digital components are selected based upon the received request and predicted values for one or more non-observable selection parameters of the request. The digital components are selected based at least in part on the predicted metrics for the digital components. In some implementations, a content selection engine scores each of the candidate digital components, ranks the candidate digital components based on their scores, and then selects one or more of the highest-ranked candidate digital components as the winning digital components for the request. The scores for the digital components can be based exclusively on the predicted metrics, or can be based on multiple factors including the predicted metrics. In some implementations, the scores for candidate digital components are a function of the predicted metrics for the candidate digital components, the bid amounts for the candidate digital components, and optionally one or more additional factors. Digital components having a higher performance and a higher bid amount may be more likely to be selected as winning content than other items having lower performance scores or bid amounts.

At stage 522, the content distribution system provides data to the user device that enables, and causes, the user device to present the winning digital components in the presentation of the electronic document. In some implementations, the content distribution system itself may store digital components on behalf of third-party content providers and can directly transmit the winning items to the user device. In other implementations, the content distribution system may return instructions to the user device to access the winning third-party content at one or more specified addresses for content stored at third-party content servers. In yet other implementations, the content distribution system may instruct independent third-party content servers to deliver the winning third part content to the user device.

In some implementations, the system may be adapted to return digital components that are presented via a digital assistant device, e.g., a device without a display that primarily relies on spoken interactions with users to receive queries/commands/instructions and to output responses to users. In these implementations, the digital components may be presented by the digital assistant device audibly, e.g., through one or more speakers of the device. For example, a user may provide a spoken input representing a voice query to the digital assistant device. The device may send an audio or text representation of the spoken input/voice query to the content distribution system, along with context data that indicates one or more observed selection parameters for the voice query request (e.g., a user identifier, a time of day, previous queries in a voice session). The digital assistant device may use all or some of the observed selection parameters to predict a non-observable (e.g., latent) parameter and may use the observed and predicted parameter values to evaluate candidate digital components and select one or more digital components to return to the digital assistant device.

Figure 6 is a flowchart of an example process 600 for training a metric prediction model and a parameter prediction model. In this example, the parameter prediction model is an embedded in the metric prediction model and the models are jointly trained. The process 600 may be carried out by a training computing system, e.g., a system of one or more computers in one or more locations. The metric prediction and parameter prediction models that are the subjects of training here can be the metric prediction and parameter prediction models 326, 328, 402, and 404 previously described. In this example, the metric prediction model and the parameter prediction model are neural network machine-learning models.

At stage 602, the system obtains a set of training samples. The training samples can each include a set of predictive inputs and a target user action. In some implementations, the training samples represent historical instances of served third-party digital content. The predictive inputs may characterize, for example, selection parameters associated with a third-party content request, distribution parameters associated with a digital component that was selected as a winning item and returned for display in an electronic document in response to the request, or a combination of these. The target user action indicate whether a user interacted with (e.g., clicked) the third-party component in the display of the electronic document.

The predictive inputs in each training sample can include a set of common predictive inputs that are present in all or most of the training samples. These common predictive inputs may characterize request and/or distribution parameters that are readily collected and recorded in serving logs. For example, the common predictive inputs may characterize observable parameters of a request, but may exclude non-observable parameters that require additional instrumentation to determine and which may be computationally difficult or expensive to obtain. However, a fraction of the training samples may further include a "scarce" predictive input that characterizes on a parameter of historical context that is available for only a portion (e.g., a small portion such as 1-3 percent) of the served content. In some implementations, scarce predictive inputs may correspond to non-observable parameters such as the vertical display position of a third-party digital component in the electronic document. For example, a content distribution system may have historically anonymized and logged the non-observable request parameters and the distribution parameters for the winning third-party content of requests for every instance of a third-party content selection process over a period of time. The common predictive inputs in the training samples may be derived from this logged data. In addition, for one-percent of the traffic, for example, user devices may be configured to report scare parameters such as the actual vertical display position to an analysis server of the content distribution system. In these instances, the training samples may further include a predictive input representing the scarce parameter that is not available in most other samples.

At stage 604, the system initializes training states of the metric prediction model and the parameter prediction sub-model. The training state of a neural network, such as the metric prediction model or the parameter prediction sub-model, represents the current values of internal parameters of the network such as the weights of neurons in one or more hidden layers of the network. The state of the network can be initialized with random values, and then is iteratively updated during the training process 600 described herein. Stages 606-626 describe operations for a single training iteration (cycle) for a particular training sample, but these stage 606-626 may be repeated in additional training iterations for additional training samples until a training termination condition is met. For example, training may cease after a pre-defined number of training iterations, upon verifying that the models have achieved one or more performance criteria, and/or after all the training samples have been processed.

At stage 608, the system determines whether the training sample includes a scarce predictive input.

If the training sample does not include an actual scarce predictive input, the process 600 proceeds from stage 608 to stage 612 and a first subset of the common predictive inputs are processed by the parameter prediction sub-model according to its current state to predict the scarce predictive input. At stage 614, the metric prediction model then processes a second subset of the common predictive inputs and the predicted scarce predictive input according to the current state of the model to generate a predicted user action for the digital component that corresponds to the present training sample. For example, the parameter prediction sub-model may process the first subset of the common predictive inputs to predict a vertical display position of the digital component in an electronic document, and then the metric prediction model may process other predictive inputs and the predicted vertical display position to generate the predicted user action. The predicted user interaction may be a score that represents a likelihood that a user will interact with (e.g., click) the digital component given the conditions indicated by the predictive inputs.

If the training sample does include an actual scarce predictive input, the process proceeds from stage 608 to stage 610, where the metric prediction model processes all of the predictive inputs, including both the common predictive inputs and the actual scarce predictive input, to generate the score for the predicted user action.

At stage 616, the system determines a first output error between the predicted user action and the target user action for the training sample based on a loss function. At stage 618, the system then updates the current state of the metric prediction model based on the first output error. Updating the current state of the model can include adjusting the weights for neurons in the neural network so as to minimize the first output error. In some implementations, the training system uses machine-learning techniques such as stochastic gradient descent with backpropagation to adjust current values of the internal parameters of the neural network and optimize a loss function. However, to prevent influence on the parameter prediction sub-model as a result of the first output error between the predicted user action and the target user action, the training system can implement a stop gradient that isolates the parameter prediction sub-model from the rest of the metric prediction model. Therefore, as error backpropagated through the neural network for the metric prediction model, the error will not cause modifications to the current state of the parameter prediction sub-model.

Instead, in some implementations, the training system may only update the state of the parameter prediction sub-model during training iterations for which the training sample includes an actual scarce predictive input. In this scenario, the process 600 may further branch after stage 610 to stage 622. At stage 622, the system uses the parameter prediction sub-model to process the first subset of predictive inputs and generates a predicted value for the scarce predictive input. At stage 624, the system determines a second output error between the actual scarce predictive input and the predicted scarce predictive input. At stage 626, the system then updates the current state of the parameter prediction sub-model based on the second output error. In some implementations, the training system uses machine-learning techniques such as stochastic gradient descent with backpropagation to adjust current values of the internal parameters of the portion of the metric prediction neural network that corresponds to the parameter prediction sub-model in order to optimize a loss function and minimize the second output error.

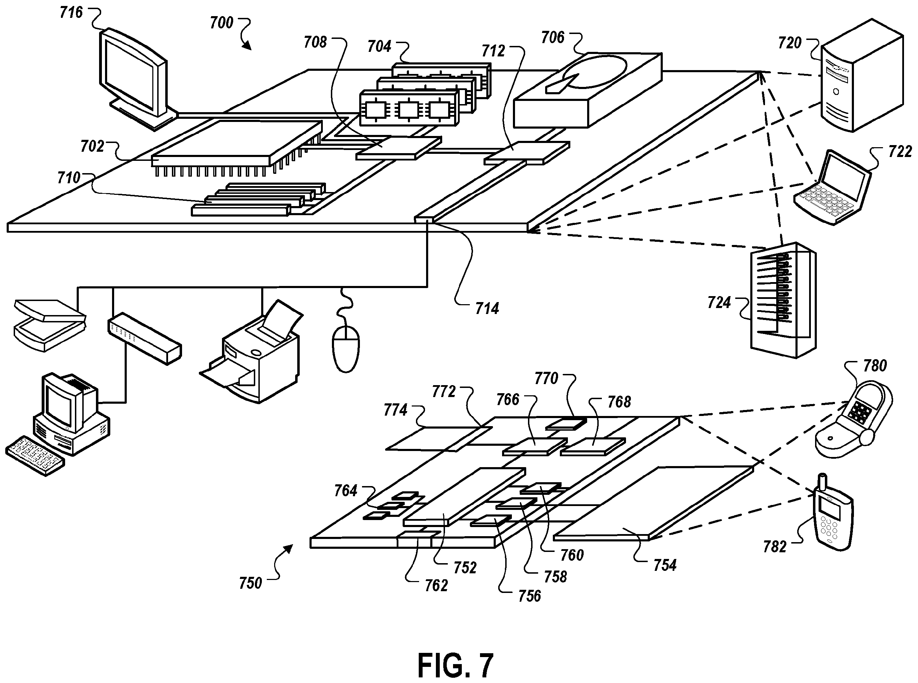

Figure 7 shows an example of a computing device 700 and a mobile computing device that can be used to implement the techniques described herein. The computing device 700 is intended to represent various forms of digital computers, such as laptops, desktops, workstations, personal digital assistants, servers, blade servers, mainframes, and other appropriate computers. The mobile computing device is intended to represent various forms of mobile devices, such as personal digital assistants, cellular telephones, smart-phones, and other similar computing devices. The components shown here, their connections and relationships, and their functions, are meant to be exemplary only, and are not meant to limit implementations of the inventions described and/or claimed in this document.

The computing device 700 includes a processor 702, a memory 704, a storage device 706, a high-speed interface 708 connecting to the memory 704 and multiple high-speed expansion ports 710, and a low-speed interface 712 connecting to a low-speed expansion port 714 and the storage device 706. Each of the processor 702, the memory 704, the storage device 706, the high-speed interface 708, the high-speed expansion ports 710, and the low-speed interface 712, are interconnected using various busses, and may be mounted on a common motherboard or in other manners as appropriate. The processor 702 can process instructions for execution within the computing device 700, including instructions stored in the memory 704 or on the storage device 706 to display graphical information for a GUI on an external input/output device, such as a display 716 coupled to the high-speed interface 708. In other implementations, multiple processors and/or multiple buses may be used, as appropriate, along with multiple memories and types of memory. Also, multiple computing devices may be connected, with each device providing portions of the necessary operations (e.g., as a server bank, a group of blade servers, or a multi-processor system).

The memory 704 stores information within the computing device 700. In some implementations, the memory 704 is a volatile memory unit or units. In some implementations, the memory 704 is a non-volatile memory unit or units. The memory 704 may also be another form of computer-readable medium, such as a magnetic or optical disk.

The storage device 706 is capable of providing mass storage for the computing device 700. In some implementations, the storage device 706 may be or contain a computer-readable medium, such as a floppy disk device, a hard disk device, an optical disk device, or a tape device, a flash memory or other similar solid state memory device, or an array of devices, including devices in a storage area network or other configurations. The computer program product may also contain instructions that, when executed, perform one or more methods, such as those described above. The computer program product can also be tangibly embodied in a computer- or machine-readable medium, such as the memory 704, the storage device 706, or memory on the processor 702.

The high-speed interface 708 manages bandwidth-intensive operations for the computing device 700, while the low-speed interface 712 manages lower bandwidth-intensive operations. Such allocation of functions is exemplary only. In some implementations, the high-speed interface 708 is coupled to the memory 704, the display 716 (e.g., through a graphics processor or accelerator), and to the high-speed expansion ports 710, which may accept various expansion cards (not shown). In the implementation, the low-speed interface 712 is coupled to the storage device 706 and the low-speed expansion port 714. The low-speed expansion port 714, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 700 may be implemented in a number of different forms, as shown in the figure. For example, it may be implemented as a standard server 720, or multiple times in a group of such servers. In addition, it may be implemented in a personal computer such as a laptop computer 722. It may also be implemented as part of a rack server system 724. Alternatively, components from the computing device 700 may be combined with other components in a mobile device (not shown), such as a mobile computing device 750. Each of such devices may contain one or more of the computing device 700 and the mobile computing device 750, and an entire system may be made up of multiple computing devices communicating with each other.

The mobile computing device 750 includes a processor 752, a memory 764, an input/output device such as a display 754, a communication interface 766, and a transceiver 768, among other components. The mobile computing device 750 may also be provided with a storage device, such as a micro-drive or other device, to provide additional storage. Each of the processor 752, the memory 764, the display 754, the communication interface 766, and the transceiver 768, are interconnected using various buses, and several of the components may be mounted on a common motherboard or in other manners as appropriate.

The processor 752 can execute instructions within the mobile computing device 750, including instructions stored in the memory 764. The processor 752 may be implemented as a chipset of chips that include separate and multiple analog and digital processors. The processor 752 may provide, for example, for coordination of the other components of the mobile computing device 750, such as control of user interfaces, applications run by the mobile computing device 750, and wireless communication by the mobile computing device 750.

The processor 752 may communicate with a user through a control interface 758 and a display interface 756 coupled to the display 754. The display 754 may be, for example, a TFT (Thin-Film-Transistor Liquid Crystal Display) display or an OLED (Organic Light Emitting Diode) display, or other appropriate display technology. The display interface 756 may comprise appropriate circuitry for driving the display 754 to present graphical and other information to a user. The control interface 758 may receive commands from a user and convert them for submission to the processor 752. In addition, an external interface 762 may provide communication with the processor 752, so as to enable near area communication of the mobile computing device 750 with other devices. The external interface 762 may provide, for example, for wired communication in some implementations, or for wireless communication in other implementations, and multiple interfaces may also be used.

The memory 764 stores information within the mobile computing device 750. The memory 764 can be implemented as one or more of a computer-readable medium or media, a volatile memory unit or units, or a non-volatile memory unit or units. An expansion memory 774 may also be provided and connected to the mobile computing device 750 through an expansion interface 772, which may include, for example, a SIMM (Single In Line Memory Module) card interface. The expansion memory 774 may provide extra storage space for the mobile computing device 750, or may also store applications or other information for the mobile computing device 750. Specifically, the expansion memory 774 may include instructions to carry out or supplement the processes described above, and may include secure information also. Thus, for example, the expansion memory 774 may be provide as a security module for the mobile computing device 750, and may be programmed with instructions that permit secure use of the mobile computing device 750. In addition, secure applications may be provided via the SIMM cards, along with additional information, such as placing identifying information on the SIMM card in a non-hackable manner.

The memory may include, for example, flash memory and/or NVRAM memory (non-volatile random access memory), as discussed below. The computer program product contains instructions that, when executed, perform one or more methods, such as those described above. The computer program product can be a computer- or machine-readable medium, such as the memory 764, the expansion memory 774, or memory on the processor 752. In some implementations, the computer program product can be received in a propagated signal, for example, over the transceiver 768 or the external interface 762.

The mobile computing device 750 may communicate wirelessly through the communication interface 766, which may include digital signal processing circuitry where necessary. The communication interface 766 may provide for communications under various modes or protocols, such as GSM voice calls (Global System for Mobile communications), SMS (Short Message Service), EMS (Enhanced Messaging Service), or MMS messaging (Multimedia Messaging Service), CDMA (code division multiple access), TDMA (time division multiple access), PDC (Personal Digital Cellular), WCDMA (Wideband Code Division Multiple Access), CDMA2000, or GPRS (General Packet Radio Service), among others. Such communication may occur, for example, through the transceiver 768 using a radio-frequency. In addition, short-range communication may occur, such as using a Bluetooth, WiFi, or other such transceiver (not shown). In addition, a GPS (Global Positioning System) receiver module 770 may provide additional navigation- and location-related wireless data to the mobile computing device 750, which may be used as appropriate by applications running on the mobile computing device 750.

The mobile computing device 750 may also communicate audibly using an audio codec 760, which may receive spoken information from a user and convert it to usable digital information. The audio codec 760 may likewise generate audible sound for a user, such as through a speaker, e.g., in a handset of the mobile computing device 750. Such sound may include sound from voice telephone calls, may include recorded sound (e.g., voice messages, music files, etc.) and may also include sound generated by applications operating on the mobile computing device 750.

The mobile computing device 750 may be implemented in a number of different forms, as shown in the figure. For example, it may be implemented as a cellular telephone 780. It may also be implemented as part of a smart-phone 782, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms machine-readable medium and computer-readable medium refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term machine-readable signal refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network (LAN), a wide area network (WAN), and the Internet.

The computing system can include clients and servers. A client and server are generally remote from each other and typically interact through a communication network. The relationship of client and server arises by virtue of computer programs running on the respective computers and having a client-server relationship to each other.

In situations in which the systems, methods, devices, and other techniques here collect personal information about users, or may make use of personal information, the users may be provided with an opportunity to control whether programs or features collect user information (e.g., information about a user's social network, social actions or activities, profession, a user's preferences, or a user's current location), or to control whether and/or how to receive content from the content server that may be more relevant to the user. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over how information is collected about the user and used by a content server.

Although various implementations have been described in detail above, other modifications are possible. In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other implementations are within the scope of the following claims.

## Claims

1. A computer-implemented method, comprising:
receiving, by a computing system, a request for a digital component to present in an electronic interface at a user device;
determining a context for the request, the context indicating actual values for observable parameters of the request;
generating a predicted value for a non-observable parameter of the request that is unknown when the request is received, wherein the predicted value is generated based on actual values for a first subset of the observable parameters of the request that are included in the request, wherein the first subset includes one or more of:
an identity of a user agent at the user device in which the electronic interface is presented;
a screen size or resolution of the user device display; and
a projected layout of the electronic interface;
identifying a set of candidate digital components;
for each candidate digital component in the set of candidate digital components, determining, without waiting for the non-observable parameter to become observable, a predicted likelihood of user interaction with the candidate digital component that would occur if the candidate digital component were returned to the user device responsive to the request, wherein determining the predicted likelihood is based at least in part on the predicted value for the non-observable parameter of the request and distribution parameters associated with the candidate digital component;
selecting one or more digital components from the set of candidate digital components based upon the predicted likelihoods, wherein selecting the one or more candidate digital components comprises:
ranking each candidate digital component in the set of digital components based on the respective predicted likelihood; and
selecting one or more of the highest-ranked candidate digital components; and
providing data to the user device to cause the user device to present the one or more selected candidate digital components in the electronic interface,
wherein the non-observable parameter of the request represents a display position for the requested digital component in the electronic interface at the user device.

2. The method of claim 1, wherein the display position indicates a vertical position for the requested digital component in the electronic interface at the user device.

3. The method of any preceding claim, further comprising:
(i) generating predictive inputs for a performance prediction model based on the predicted value for the non-observable parameter of the request, the actual value for the at least the first observable parameter of the request, and the value for the at least a first distribution parameter for the candidate digital component, and
(ii) processing the predictive inputs with the performance prediction model to determine a predicted performance metric for the candidate digital component.

4. The method of claim 3, wherein the performance prediction engine is further configured to generate the predicted value for the non-observable parameter of the request using a non-observable parameter prediction model,
wherein the non-observable parameter prediction model is a portion of the performance prediction model that generates the predicted value for the non-observable parameter of the request for use as one of the predictive inputs to the performance prediction model before the predicted performance metric is determined.

5. The method of any preceding claim, wherein, for each candidate digital component among the at least some of the set of candidate digital components identified in the digital content database, the predicted performance metric for the candidate digital component indicates a predicted click-through rate ("CTR") for the candidate digital component.

6. The method of any preceding claim, wherein:
the first distribution parameter associated with a given candidate digital component is a keyword associated with the candidate digital component or a bid amount associated with the candidate digital component.

7. The computer-implemented method of claim 3, wherein determining the context for the request comprises parsing the request to extract the actual values for the observable parameters of the request from content of the request.

8. The computer-implemented method of claim 4, wherein the non-observable parameter prediction model and the performance prediction model are jointly trained.

9. The computer-implemented method of claim 4, wherein the non-observable parameter prediction model is entirely distinct from the performance prediction model, wherein the non-observable parameter prediction model and the performance prediction model are separately trained.

10. The computer-implemented method of claim 4, wherein the non-observable parameter prediction model and the performance prediction models are machine-learning models.

11. The computer-implemented method of claim 4, wherein:
the electronic interface is a webpage or an application interface presented at the user device, and
the digital component is a third-party media item that is distributed on behalf of a third party that is different from a publisher or a developer of the webpage or the application interface.

12. The computer-implemented method of claim 4, wherein the observable parameters of the request include at least one of an identity of a user agent at the user device in which the electronic interface is presented, a geographic location associated with the request, a time of day associated with the request, a search query associated with the request or keywords derived from the search query, or an identity of the electronic interface in which the requested digital component is to be presented, wherein the identity of the electronic interface is represented by an address for a webpage or a website that provides the electronic interface.

13. The computer-implemented method of claim 4, wherein the distribution parameters associated with each of at least some of the set of candidate digital components include at least one of a keyword associated with the candidate digital component or a bid amount associated with the candidate digital component.

14. A computing system, comprising:
one or more computers; and
one or more computer-readable media having instructions stored thereon that, when executed by the one or more computers, cause the one or more computers to implement a method according to any preceding claim.

## Patentansprüche

1. Computerimplementiertes Verfahren, umfassend:
Empfangen, durch ein Rechensystem, einer Anforderung für eine digitale Komponente zur Präsentation in einer elektronischen Schnittstelle an einer Benutzervorrichtung;
Bestimmen eines Kontexts für die Anforderung, wobei der Kontext Ist-Werte für beobachtbare Parameter der Anforderung angibt;
Generieren eines vorhergesagten Werts für einen nicht beobachtbaren Parameter der Anforderung, der unbekannt ist, wenn die Anforderung empfangen wird, wobei der vorhergesagte Wert basierend auf Ist-Werten für eine erste Teilmenge der beobachtbaren Parameter der Anforderung generiert wird, die in der Anforderung enthalten sind, wobei die erste Teilmenge eines oder mehrere enthält von:
einer Identität eines User-Agents an der Benutzervorrichtung, in der die elektronische Schnittstelle präsentiert wird;
einer Bildschirmgröße oder Auflösung der Benutzervorrichtungsanzeige; und
einem projizierten Layout der elektronischen Schnittstelle;
Identifizieren eines Satzes von digitalen Kandidatendomponenten;
für jede digitale Kandidatendomponente in dem Satz von digitalen Kandidatendomponenten, Bestimmen, ohne darauf zu warten, dass der nicht beobachtbare Parameter beobachtbar wird, einer vorhergesagten Wahrscheinlichkeit einer Benutzerinteraktion mit der digitalen Kandidatendomponente, die auftreten würde, wenn die digitale Kandidatendomponente als Reaktion auf die Anforderung an die Benutzervorrichtung zurückgegeben würde,
wobei das Bestimmen der vorhergesagten Wahrscheinlichkeit zumindest teilweise auf dem vorhergesagten Wert für den nichtbeobachtbaren Parameter der Anforderung und auf mit der digitalen Kandidatendomponente assoziierten Verteilungsparametern basiert;
Auswählen einer oder mehrerer digitaler Komponenten aus dem Satz von digitalen Kandidatendomponenten basierend auf den vorhergesagten Wahrscheinlichkeiten, wobei das Auswählen der einen oder der mehreren digitalen Kandidatendomponenten umfasst:
Einstufen jeder digitalen Kandidatendomponente in dem Satz von digitalen Komponenten basierend auf der jeweiligen vorhergesagten Wahrscheinlichkeit; und
Auswählen einer oder mehrerer der am höchsten eingestuften digitalen Kandidatendomponenten; und
Bereitstellen von Daten an die Benutzervorrichtung, um die Benutzervorrichtung zu veranlassen, die eine oder die mehreren ausgewählten digitalen Kandidatendomponenten in der elektronischen Schnittstelle zu präsentieren,
wobei der nicht beobachtbare Parameter der Anforderung eine Anzeigeposition für die angeforderte digitale Komponente in der elektronischen Schnittstelle an der Benutzervorrichtung repräsentiert.

2. Verfahren nach Anspruch 1, wobei die Anzeigeposition eine vertikale Position für die angeforderte digitale Komponente in der elektronischen Schnittstelle an der Benutzervorrichtung angibt.

3. Verfahren nach einem der vorhergehenden Ansprüche, ferner umfassend:
(i) Generieren von Vorhersage-Eingaben für ein Leistungs-Vorhersagemodell basierend auf dem vorhergesagten Wert für den nicht beobachtbaren Parameter der Anforderung, dem Ist-Wert für den zumindest ersten beobachtbaren Parameter der Anforderung und dem Wert für den zumindest einen ersten Verteilungsparameter für die digitale Kandidatendomponente, und
(ii) Verarbeiten der Vorhersage-Eingaben mit dem Leistungs-Vorhersagemodell, um eine vorhergesagte Leistungsmetrik für die digitale Kandidatendomponente zu bestimmen.

4. Verfahren nach Anspruch 3, wobei die Leistungs-Vorhersage-Engine ferner konfiguriert ist, um den vorhergesagten Wert für den nicht beobachtbaren Parameter der Anforderung unter Verwendung eines Vorhersagemodells für nicht-beobachtbare Parameter zu generieren,
wobei das Vorhersagemodell für nicht beobachtbare Parameter ein Teil des Leistungs-Vorhersagemodells ist, das den vorhergesagten Wert für den nicht beobachtbaren Parameter der Anforderung zur Verwendung als eine der Vorhersage-Eingaben in das Leistungs-Vorhersagemodell generiert, bevor die vorhergesagte Leistungsmetrik bestimmt wird.

5. Verfahren nach einem der vorhergehenden Ansprüche, wobei für jede digitale Kandidatendomponente unter den zumindest einigen des in der Datenbank für digitale Inhalte identifizierten Satzes von digitalen Kandidatendomponenten die vorhergesagte Leistungsmetrik für die digitale Kandidatendomponente eine vorhergesagte Klickrate ("CTR") für die digitale Kandidatendomponente angibt.

6. Verfahren nach einem der vorhergehenden Ansprüche, wobei:
der erste Verteilungsparameter, der mit einer gegebenen digitalen Kandidatendomponenten assoziiert ist, ein mit der digitalen Kandidatendomponente assoziiertes Schlüsselwort oder ein mit der digitalen Kandidatendomponente assoziierter Gebotsbetrag ist.

7. Computerimplementiertes Verfahren nach Anspruch 3, wobei das Bestimmen des Kontexts für die Anforderung ein Parsen der Anforderung umfasst, um die Ist-Werte für die beobachtbaren Parameter der Anforderung aus dem Inhalt der Anforderung zu extrahieren.

8. Computerimplementiertes Verfahren nach Anspruch 4, wobei das Vorhersagemodell für nicht beobachtbare Parameter und das Leistungs-Vorhersagemodell gemeinsam trainiert sind.

9. Computerimplementiertes Verfahren nach Anspruch 4, wobei das Vorhersagemodell für nicht beobachtbare Parameter gänzlich von dem Leistungs-Vorhersagemodell verschieden ist, wobei das Vorhersagemodell für nicht beobachtbare Parameter und das Leistungs-Vorhersagemodell separat trainiert sind.

10. Computerimplementiertes Verfahren nach Anspruch 4, wobei das Vorhersagemodell für nicht beobachtbare Parameter und die Leistungs-Vorhersagemodelle Machine-Learning-Modelle sind.

11. Computerimplementiertes Verfahren nach Anspruch 4, wobei:
die elektronische Schnittstelle eine Webseite oder eine Anwendungsschnittstelle ist, die an der Benutzervorrichtung präsentiert wird, und
die digitale Komponente ein Drittanbieter-Medienelement ist, das im Namen eines Dritten verteilt wird, der von einem Herausgeber oder einem Entwickler der Webseite oder der Anwendungsschnittstelle verschieden ist.

12. Computerimplementiertes Verfahren nach Anspruch 4, wobei die beobachtbaren Parameter der Anforderung mindestens eines von einer Identität eines User-Agents an der Benutzervorrichtung, in der die elektronische Schnittstelle präsentiert wird, einem mit der Anforderung assoziierten geografischen Standort, einer mit der Anforderung assoziierten Tageszeit, einer mit der Anforderung assoziierten Suchanfrage oder von der Suchanfrage abgeleiteten Schlüsselwörtern oder einer Identität der elektronischen Schnittstelle, in der die angeforderte digitale Komponente präsentiert werden soll, enthalten, wobei die Identität der elektronischen Schnittstelle durch eine Adresse für eine Webseite oder eine Website repräsentiert wird, die die elektronische Schnittstelle bereitstellt.

13. Computerimplementiertes Verfahren nach Anspruch 4, wobei die Verteilungsparameter, die mit jeder von zumindest einigen des Satzes von digitalen Kandidatendomponenten assoziiert sind, mindestens eines von einem mit der digitalen Kandidatendomponente assoziierten Schlüsselwort oder einem mit der digitalen Kandidatendomponente assoziierten Gebotsbetrag enthalten.

14. Rechensystem, umfassend:
einen oder mehrere Computer; und
ein oder mehrere computerlesbare Medien, die darauf gespeicherte Anweisungen aufweisen, die bei Ausführung durch den einen oder die mehreren Computer den einen oder die mehreren Computer veranlassen, ein Verfahren nach einem der vorhergehenden Ansprüche zu implementieren.

## Revendications

1. Procédé mis en œuvre par ordinateur, comprenant :
la réception, par un système informatique, d'une demande de présentation d'un composant numérique dans une interface électronique au niveau d'un dispositif utilisateur ;
la détermination d'un contexte pour la demande, le contexte indiquant des valeurs réelles de paramètres observables de la demande ;
la génération d'une valeur prédite pour un paramètre non observable de la demande inconnu lors de la réception de la demande,
dans lequel la valeur prédite est générée sur la base de valeurs réelles d'un premier sous-ensemble des paramètres observables de la demande inclus dans la demande, dans lequel le premier sous-ensemble comporte un ou plusieurs des éléments suivants :
une identité d'un agent utilisateur au niveau du dispositif utilisateur dans lequel l'interface électronique est présentée ;
une taille ou une résolution de l'écran du dispositif utilisateur ; et
une disposition prévisionnelle de l'interface électronique ;
l'identification d'un ensemble de composants numériques candidats ;
pour chaque composant numérique candidat dans l'ensemble de composants numériques candidats, la détermination, sans attendre que le paramètre non observable devienne observable, d'une probabilité prédite d'interaction de l'utilisateur avec le composant numérique candidat qui se produirait si le composant numérique candidat était renvoyé au dispositif utilisateur en réponse à la demande, dans lequel la détermination de la probabilité prédite est basée au moins en partie sur la valeur prédite du paramètre non observable de la demande et les paramètres de distribution associés au composant numérique candidat ;
la sélection d'un ou de plusieurs composants numériques parmi l'ensemble de composants numériques candidats sur la base des probabilités prédites, dans lequel la sélection des un ou plusieurs composants numériques candidats comprend :
le classement de chaque composant numérique candidat dans l'ensemble de composants numériques sur la base de la probabilité prédite respective ; et
la sélection d'un ou de plusieurs des composants numériques candidats les mieux classés ; et
la fourniture de données au dispositif utilisateur afin que le dispositif utilisateur présente les un ou plusieurs composants numériques candidats sélectionnés dans l'interface électronique,
dans lequel le paramètre non observable de la demande représente une position d'affichage pour le composant numérique demandé dans l'interface électronique au niveau du dispositif utilisateur.

2. Procédé selon la revendication 1, dans lequel la position d'affichage indique une position verticale pour le composant numérique demandé dans l'interface électronique du dispositif utilisateur.

3. Procédé selon une quelconque revendication précédente, comprenant également :
(i) la génération des entrées prédictives pour un modèle de prédiction de performance sur la base de la valeur prédite du paramètre non observable de la demande, de la valeur réelle de l'au moins un premier paramètre observable de la demande et de la valeur de l'au moins un premier paramètre de distribution pour le composant numérique candidat, et
(ii) le traitement des entrées prédictives avec le modèle de prédiction de performance pour déterminer une mesure de performance prédite pour le composant numérique candidat.

4. Procédé selon la revendication 3, dans lequel le moteur de prédiction de performance est également configuré pour générer la valeur prédite du paramètre non observable de la demande à l'aide d'un modèle de prédiction de paramètre non observable, dans lequel le modèle de prédiction de paramètre non observable est une partie du modèle de prédiction de performance qui génère la valeur prédite pour le paramètre non observable de la demande à utiliser comme l'une des entrées prédictives du modèle de prédiction de performance avant la détermination de la mesure de performance prédite.

5. Procédé selon une quelconque revendication précédente, dans lequel, pour chaque composant numérique candidat parmi les au moins certains de l'ensemble de composants numériques candidats identifiés dans la base de données de contenu numérique, la mesure de performance prévue pour le composant numérique candidat indique un taux de clic prévu (« CTR ») pour le composant numérique candidat.

6. Procédé selon une quelconque revendication précédente, dans lequel:
le premier paramètre de distribution associé à un composant numérique candidat donné est un mot-clé associé au composant numérique candidat ou un montant d'enchère associé au composant numérique candidat.

7. Procédé mis en œuvre par ordinateur selon la revendication 3, dans lequel la détermination du contexte de la demande comprend l'analyse de la demande pour extraire les valeurs réelles des paramètres observables de la demande à partir du contenu de la demande.

8. Procédé mis en œuvre par ordinateur selon la revendication 4, dans lequel le modèle de prédiction de paramètre non observable et le modèle de prédiction de performance sont entraînés conjointement.

9. Procédé mis en œuvre par ordinateur selon la revendication 4, dans lequel le modèle de prédiction de paramètre non observable est entièrement distinct du modèle de prédiction de performance, dans lequel le modèle de prédiction de paramètre non observable et le modèle de prédiction de performance sont entraînés séparément.

10. Procédé mis en œuvre par ordinateur selon la revendication 4, dans lequel le modèle de prédiction de paramètre non observable et le modèle de prédiction de performance sont des modèles d'apprentissage automatique.

11. Procédé mis en œuvre par ordinateur selon la revendication 4, dans lequel :
l'interface électronique est une page web ou une interface d'application présentée sur le dispositif utilisateur, et
le composant numérique est un élément multimédia tiers distribué pour le compte d'un tiers différent d'un éditeur ou d'un déve-loppeur de la page web ou de l'interface d'application.

12. Procédé mis en œuvre par ordinateur selon la revendication 4, dans lequel les paramètres observables de la demande comportent au moins un élément parmi une identité d'un agent utilisateur sur le dispositif utilisateur dans lequel l'interface électronique est présentée, une localisation géographique associée à la demande, une heure de la journée associée à la demande, une demande de recherche associée à la demande ou des mots clés dérivés de la demande de recherche, ou une identité de l'interface électronique dans laquelle le composant numérique demandé doit être présenté, dans lequel l'identité de l'interface électronique est représentée par l'adresse d'une page Web ou d'un site Web qui fournit l'interface électronique.

13. Procédé mis en œuvre par ordinateur selon la revendication 4, dans lequel les paramètres de distribution associés à chacun d'au moins certains de l'ensemble de composants numériques candidats comportent au moins un élément parmi un mot-clé associé au composant numérique candidat ou un montant d'enchère associé au composant numérique candidat.

14. Système informatique, comprenant :
un ou plusieurs ordinateurs ; et
un ou plusieurs supports lisibles par ordinateur sur lesquels sont stockées des instructions qui, lorsqu'elles sont exécutées par les un ou plusieurs ordinateurs, amènent les un ou plusieurs ordinateurs à mettre en œuvre un procédé selon une quelconque revendication précédente.
